# EUROPÄISCHE PATENTSCHRIFT

(11) **EP 3 617 009 B1**
(45) Veröffentlichungstag und Bekanntmachung des Hinweises auf die Patenterteilung: **09.06.2021**
(21) Anmeldenummer: 19193532.9
(22) Anmeldetag: 26.08.2019
(51) Int. Cl.: B60R 22/48

(54) **SYSTEM UND VERFAHREN ZUR ERKENNUNG DES VERRIEGELUNGS- UND/ODER FUNKTIONSZUSTANDES EINES SICHERHEITSGURTSYSTEMS**
SYSTEM AND METHOD FOR DETECTING THE LOCKING AND / OR FUNCTIONAL STATE OF A SAFETY BELT SYSTEM
SYSTÈME ET PROCÉDÉ DE DÉTECTION DE L'ÉTAT DE VERROUILLAGE ET / OU DE FONCTIONNEMENT D'UN SYSTÈME DE CEINTURE DE SÉCURITÉ

(30) Priorität: 30.08.2018 DE 102018214733
(43) Veröffentlichungstag der Anmeldung: 04.03.2020
(73) Patentinhaber: Ford Global Technologies, LLC, Dearborn, MI 48126 (US)
(72) Erfinder: Fassbender, Martin, 53913 Buschhoven (DE); Kuepper, Philipp, 41515 Grevenbroich (DE)
(74) Vertreter: Markowitz, Markus

(56) Entgegenhaltungen:
- WO-A1-98/29283
- DE-A1-102006 055 141
- DE-A1-102007 023 580
- DE-A1-102007 058 277
- DE-A1-102007 058 278

## Beschreibung

Die Erfindung betrifft ein System zur Erkennung des Verriegelungs- und/oder Funktionszustandes eines einem Sitz eines Kraftfahrzeugs zugeordneten Sicherheitsgurtsystems, umfassend ein fahrzeug- oder sitzseitig befestigtes Gurtschloss zur lösbaren Befestigung einer einem Sicherheitsgurt zugeordneten Gurtzunge, einen ersten und zweiten in dem Gurtschloss positionsfest angeordneten RFID Transponder, eine außerhalb des Gurtschlosses angeordnete, mit einer Auswerteeinheit verbundene RFID Leseeinheit, und ein in dem Gurtschloss vorgesehenes Abschirmelement zur Abschirmung elektromagnetischer Wellen, die bei Bewegung der Gurtzunge von ihrer Öffnungsstellung in die Verriegelungsstellung von einer ersten Position in eine zweiten Position verschiebbar ist.

Weiterhin betrifft die Erfindung ein Verfahren zur Erkennung des Verriegelungs- und/oder Funktionszustandes eines einem Sitz eines Kraftfahrzeugs zugeordneten Sicherheitsgurtsystems unter Verwendung des vorgenannten Systems.

In vielerlei Ländern ist es für Fahrer, Beifahrer und Fahrgäste von Kraftfahrzeugen verpflichtend, während der Fahrt einen Sicherheitsgurt anzulegen. Inzwischen weisen moderne Kraftfahrzeuge Systeme auf, die einen Fahrzeuginsassen auf einen nicht angelegten Sicherheitsgurt hinweisen, beispielsweise durch ein optisches oder akustisches Warnsignal. Zur Feststellung, ob ein Fahrzeuginsasse den Sicherheitsgurt angelegt hat, sind Sensoren bekannt, die ein Einstecken einer Gurtzunge in das Gurtschloss erfassen. Unterbleibt eine solche Aktion, so wird eine Warnung ausgegeben oder gar das Starten bzw. Losfahren des Fahrzeugs unterbunden. In modernen Kraftfahrzeugen kommen heutzutage insbesondere Dreipunktgurtsysteme zum Einsatz. Im angelegten Zustand, also bei in das Gurtschloss eingesteckter und verriegelter Gurtzunge, ist der Sicherheitsgurt in einen Schulter-Brustgurtbereich und einen Beckengurtbereich unterteilt. Dabei ist der Fahrzeuginsasse über drei Punkte an die Karosserie des Kraftfahrzeugs angebunden. Bezogen auf den Fahrersitz eines Kraftfahrzeugs wird ein erster Anbindungspunkt häufig von einem Gurtaufroller bzw. ein in dessen Nähe vorgesehenes Umlenkelement gebildet. Über den Gurtaufroller ist der Sicherheitsgurt auf- und abrollbar. Ein zweiter Anbindungspunkt wird durch einen Endbeschlag im Bereich der B-Säule des Fahrzeugs gebildet. Ein dritter Anbindungspunkt kann von dem Gurtschloss gebildet sein, welches vornehmlich über eine Gurtpeitsche sitz- oder fahrzeugseitig verankert ist.

Zur Erkennung, ob ein Sicherheitsgurt angelegt bzw. die Gurtzunge eines Sicherheitsgurts in dem zugehörigen Gurtschloss arretiert ist, sind unterschiedliche Systeme bekannt. Zu unterscheiden ist dabei zunächst zwischen mechanischen und elektronischen Systemen.

Aus der DE 34 21 740 A1 ist eine mechanische Schaltereinrichtung zur Erkennung des Anschnallstatus bekannt. Dabei bleibt die Stromverbindung zwischen der Zündung und dem Anlasser des Fahrzeugs solange unterbrochen, bis der Sicherheitsgurt in das Gurtschloss eingerastet ist. Im eingerasteten Zustand werden über die Gurtzunge beziehungsweise ein damit verbundenes Wirkelement mechanische Kontakte betätigt. Nachteilig ist bei einem solchen System, dass sich an den mechanischen Kontaktflächen Schmutz und Feuchtigkeit ansammeln kann. Dadurch kann die Schaltsicherheit beeinträchtigt werden, was erhebliche Folgen für die Sicherheit der Fahrzeuginsassen haben kann, z.B. im Falle eines Crashs.

Die DE 199 07 716 A1 beschreibt eine elektronische Schaltereinrichtung für ein Gurtschloss. Die physikalische Basis für dieses Schalterprinzip bildet der Hall-Effekt. Die dort beschriebene Schaltereinrichtung basiert auf einer berührungslosen Verschiebung eines Permanentmagneten gegenüber einem Hall-Element. Aus der Verschiebung des Magneten bzw. dessen variierenden Abstand zum Hall-Element, resultiert eine unterschiedliche magnetische Flussdichte, wodurch Informationen zur Position des Magneten bzw. zum Verriegelungszustand des Gurtschlosses abgeleitet werden können. Zwar werden solche Systeme aufgrund der kontaktlosen Messung weniger durch Schmutz und Feuchtigkeit beeinträchtigt, jedoch sind die Hall-Elemente als elektronische Bauteile empfindlich gegenüber elektromagnetischen Störungen von Fremdquellen. Auch statische Magnetfelder beeinflussen die Messergebnisse.

Weiterhin ist es bekannt, den Verriegelungszustand eines Gurtschlosses anhand von in dem Gurtschluss vorgesehenen RFID Transpondern, sogenannten RFID (radio frequency identification) "tags", festzustellen.

So beschreibt die WO 2016/145054 A1 ein Gurtschloss mit einem RFID "tag", der auf einem Bauteil angeordnet ist, welches sich beim Einführen der Gurtzunge in einen Führungskanal des Gurtschlosses von einer ersten Position in eine zweite Position bewegt. Dabei repräsentiert die erste Position den geöffneten Zustand des Gurtschlosses, bei dem die Gurtzunge noch nicht in den Führungskanal eingeführt wurde, während die zweite Position den verriegelten Zustand repräsentiert. In dem Gurtschloss ist weiterhin ein Abschirmelement vorgesehen, welches den RFID "tag" in einer der Positionen, also im Öffnungs- oder Verriegelungszustand, daran hindert signaltechnisch mit einer außerhalb des Gurtschlosses vorgesehenen RFID Leseeinheit zu kommunizieren. Durch ein solches positionsabhängiges Zustandekommen einer signaltechnischen Verbindung kann der Verriegelungszustand des Gurtschlosses ermittelt werden. Bei einem derartigen System kann es von Nachteil sein, dass lediglich zwei Zustände des Gurtschlosses erfasst werden können, nämlich der Öffnungs- und Verriegelungszustand. Nicht erfasst werden können Zwischenpositionen, bei denen sich die Gurtzunge im Führungskanal befindet, also jenen Positionen, die die Gurtzunge einnimmt, wenn sie entweder von der Öffnungsin die Verriegelungsstellung oder von der Verriegelungs- in die Öffnungsstellung verbracht wird. Auch lassen sich mit dem in der WO 2016/145054 A1 beschriebenen System keine Beschädigungen am Gurtschloss, den RFID "tags" oder dem Abschirmelement feststellen.

Die DE 10 2007 058277 A1 offenbart ein System zur Erkennung des Verriegelungs- und/oder Funktionszustandes eines einem Sitz eines Kraftfahrzeugs zugeordneten Sicherheitsgurtsystems, umfassend ein fahrzeug- oder sitzseitig befestigtes Gurtschloss zur lösbaren Befestigung einer einem Sicherheitsgurt zugeordneten Gurtzunge bei Einführen der Gurtzunge aus einer Öffnungs- in eine Verriegelungsstellung, einen ersten und zweiten in dem Gurtschloss positionsfest angeordneten RFID Transponder, eine außerhalb des Gurtschlosses angeordnete, mit einer Auswerteeinheit verbundene RFID Leseeinheit, und ein in dem Gurtschloss vorgesehenes Abschirmelement zur Abschirmung elektromagnetischer Wellen, das bei Bewegung der Gurtzunge von ihrer Öffnungsstellung in die Verriegelungsstellung von einer ersten Position in eine zweiten Position verschiebbar ist. Auch die DE 10 2007 058277 A1 offenbart jedoch nicht die Erfassung Zwischenpositionen, bei denen sich die Gurtzunge im Führungskanal befindet, also jenen Positionen, die die Gurtzunge einnimmt, wenn sie entweder von der Öffnungs- in die Verriegelungsstellung oder von der Verriegelungs- in die Öffnungsstellung verbracht wird.

Eine auf RFID Systemen basierende Erkennung des Gurtstatus ist insbesondere für jene Fahrzeuge vorteilhaft, bei denen ein flexibler Ausbau der Fahrzeugsitze ermöglicht werden soll. In diesem Fall ist die Verwendung von Sensorsystemen, die auf einer elektrischen, kabelgebundenen Kontaktierung basieren, problematisch. Denn die Kontaktierung bzw. das Lösen der elektrischen Verbindung erfordert einen zusätzlichen Arbeitsschritt beim Ein-, Aus- und Umbau der Fahrzeugsitze. Für solche Anforderungen kommen insbesondere passive RFID Systeme in Betracht.

Im Allgemeinen umfassen RFID Systeme eine Leseeinheit, vermöge dessen ein hochfrequentes elektromagnetisches Wechselfeld erzeugt und ausgesendet wird. Ein RFID-Transponder (RFID "tag") ist in einem Abstand zur Leseeinheit auf einem bestimmten Objekt angeordnet und wird dem elektromagnetischen Wechselfeld ausgesetzt. Bei passiven RFID Transpondern dient die über eine RF-Antenne des Transponders aufgenommene Hochfrequenzenergie während des Kommunikationsvorganges der Stromversorgung des Transponders. Bei aktiven Transpondern kann die Energieversorgung auch durch eine eingebaute Batterie erfolgen. Bei halb-aktiven Tags übernimmt die Batterie lediglich die Versorgung eines dem Transponder zugeordneten Mikrochips.

Der dem RFID Transponder zugehörige Mikrochip dekodiert die von der Leseeinheit ausgesendeten Signale. Der RFID Transponder kodiert und moduliert eine etwaige Signalantwort in das eingestrahlte elektromagnetische Feld, beispielsweise durch Feldschwächung im kontaktfreien Kurzschluss oder durch gegenphasige Reflexion des vom Lesegerät ausgesendeten Wechselfeldes. Damit kann der RFID Transponder Daten des gekennzeichneten Objekts oder andere vom Lesegerät abgefragte Information übertragen. Ein entscheidender Aspekt ist, dass der RFID Transponder selbst kein Feld erzeugt, sondern das elektromagnetische Sendefeld der Leseeinheit beeinflusst.

Nebst der vorgenannten Verwendung von RFID Systemen zur Erkennung des Verriegelungszustands eines Sicherheitsgurts werden RFID Systeme in Kraftfahrzeugen auch zum kabellosen Entriegeln und Verriegeln von Türen eingesetzt.

In Anbetracht der vorangehenden Ausführungen liegt der vorliegenden Erfindung die **Aufgabe** zugrunde, ein System zur Erkennung des Verriegelungs- und/oder Funktionszustandes eines einem Sitz eines Kraftfahrzeugs zugeordneten Sicherheitsgurtsystems sowie ein entsprechendes Verfahren bereitzustellen, vermöge dessen neben der Erkennung eines Verriegelungs- oder Öffnungszustandes des Sicherheitsgurts weitergehende, den Funktionszustand des Sicherheitsgurtsystems betreffende Informationen extrahierbar sind und vermöge dessen eine langlebige Verwendung des Systems ermöglicht ist.

Zur **Lösung** dieser Aufgabe wird ein System mit den Merkmalen des Patentanspruchs 1 und ein Verfahren mit den Merkmalen des Patentanspruchs 14 vorgeschlagen.

Alle der folgenden auf das erfindungsgemäße System bezogenen Ausführungen lassen sich gleichsam mit dem erfindungsgemäß vorgeschlagenen Verfahren verwirklichen. Zur Vermeidung von Wiederholungen wird die Erfindung im Nachgang jedoch nur unter Bezugnahme auf das erfindungsgemäße "System" erläutert.

Gemäß dem vorliegenden Patentanspruch 1 betrifft die Erfindung ein System zur Erkennung des Verriegelungs- und/oder Funktionszustandes eines einem Sitz eines Kraftfahrzeugs zugeordneten Sicherheitsgurtsystems, umfassend ein fahrzeug- oder sitzseitig befestigtes Gurtschloss zur lösbaren Befestigung einer einem Sicherheitsgurt zugeordneten Gurtzunge bei Einführen der Gurtzunge aus einer Öffnungs- in eine Verriegelungsstellung, einen ersten und zweiten in dem Gurtschloss positionsfest angeordneten RFID Transponder, eine außerhalb des Gurtschlosses angeordnete, mit einer Auswerteeinheit verbundene RFID Leseeinheit, und ein in dem Gurtschloss vorgesehenes Abschirmelement zur Abschirmung elektromagnetischer Wellen, das bei Bewegung der Gurtzunge von ihrer Öffnungsstellung in die Verriegelungsstellung von einer ersten Position in eine zweiten Position verschiebbar ist. Die Erfindung zeichnet sich dadurch aus, dass das Abschirmelement eine erste Öffnung aufweist, die in der ersten Position des Abschirmelements mit dem ersten Transponder überlappt, wobei in dieser Position eine Signalverbindung zwischen dem ersten Transponder und der RFID Leseeinheit gewährleistet ist, dass das Abschirmelement eine zweite Öffnung aufweist, die in der zweiten Position des Abschirmelements mit dem zweiten Transponder überlappt, wobei in dieser Position eine Signalverbindung zwischen dem zweiten Transponder und der RFID Leseeinheit gewährleistet ist, dass bei einer Zwischenposition des Abschirmelements zwischen der ersten und zweiten Position der erste und zweite Transponder zumindest teilweise mit der ersten bzw. zweiten Öffnung überlappt, und dass die Auswerteeinheit dazu eingerichtet ist, anhand der von den Transpondern an die RFID Leseeinheit übermittelten Informationen eine Systembewertung hinsichtlich des Verriegelungs- und/oder Funktionszustands vorzunehmen, wobei in der Zwischenposition des Abschirmelements (19) eine Signalverbindung zwischen der RFID Leseeinheit (18) und dem ersten und zweiten RFID Transponder (15, 16) besteht und die Auswerteeinheit (17) dazu eingerichtet ist, eine Systembewertung dahingehend vorzunehmen, dass sich die Gurtzunge (7) zwischen der Öffnungs- und Verriegelungsstellung (8, 9) befindet.

Gemäß dem Patentanspruch 14 betrifft die Erfindung ein Verfahren gleichermaßen ein Verfahren zur Erkennung des Verriegelungs- und/oder Funktionszustandes eines einem Sitz eines Kraftfahrzeugs zugeordneten Sicherheitsgurtsystems unter Verwendung eines Systems gemäß dem Patentanspruch 1. Die der hiesigen Erfindung zugrunde liegende Aufgabe wird gleichermaßen durch das erfindungsgemäße System wie auch durch das erfindungsgemäße Verfahren gelöst.

Bei dem erfindungsgemäßen System handelt es sich um ein System zur Erkennung des Verriegelungs- und/oder Funktionszustandes eines einem Sitz eines Kraftfahrzeugs zugeordneten Sicherheitsgurtsystems. Die Erkennung eines Verriegelungszustands meint dabei Differenzierung zwischen jenem Zustand, bei dem der Sicherheitsgurt angelegt ist und eine dem Sicherheitsgurt zugeordnete Gurtzunge in einem fahrzeug- oder sitzseitig befestigten Gurtschloss verriegelt ist (Verriegelungsstellung) oder sich die Gurtzunge in einem nicht-verriegelten Zustand Gurtschlosses befindet (Öffnungsstellung). Eine Öffnungsstellung meint im Sinne der Erfindung jene Stellung, bei der die Gurtzunge noch nicht mit den Komponenten des Gurtschlosses zusammenwirkt. Die Gurtzunge kann sich also in der Öffnungsstellung außerhalb des Gurtschlosses befinden, aber auch teilweise in das Gurtschloss eingesteckt sein. In letzterem Fall liegt eine Öffnungsstellung jedoch nur dann vor, wenn die Gurtzunge noch nicht mit den Komponenten des Gurtschlosses zusammenwirkt, also ohne jeglichen Kraft- oder Betätigungsaufwand aus dem Gurtschloss entnommen werden kann. Mit dem erfindungsgemäßen System lässt sich jedoch auch eine Zwischenstellung feststellen, bei der die Gurtzunge zwar nicht in dem Gurtschloss verriegelt ist, sich jedoch innerhalb des Gurtschlosses befindet und bereits mit Komponenten des Gurtschlosses zusammenwirkt, also auf ihrem Weg von der Öffnungs- in die Verriegelungsstellung befindet oder umgekehrt. Insbesondere meint die Zwischenstellung jene Stellung der Gurtzunge, bei der sie ein Abschirmelement oder Betätigungselement gegen die Kraft einer Feder verschiebt. Insbesondere ist mit der Zwischenstellung jener Abschnitt gemeint, bei dem das Abschirmelement zwischen einer ersten Position und einer zweiten Position bewegt wird.

Ferner kann mit dem erfindungsgemäßen System der Funktionszustand des Sicherheitsgurtsystems bestimmt werden, insbesondere lässt sich damit feststellen, ob das Gurtschloss oder ein zugehöriges Bauteil beschädigt ist. Besonders vorteilhaft ist, dass mit dem der Erfindung zugrunde liegenden System eine Differenzierung zwischen dem Vorliegen eines bestimmten Verriegelungszustandes (Öffnungsstellung, Verriegelungsstellung, Zwischenstellung) und eines Funktionszustandes (Beschädigung) vorgenommen werden kann.

Erfindungsgemäß umfasst das System ein fahrzeug- oder sitzseitig befestigtes Gurtschloss zur lösbaren Befestigung einer einem Sicherheitsgurt zugeordneten Gurtzunge. Insbesondere eignet sich die Erfindung zur Verwendung mit drei-Punkt Sicherheitsgurten, ist aber nicht auf diese beschränkt. Auch kann das erfindungsgemäße System bei jeglicher Art von Fahrzeugen zum Einsatz kommen, in welchen mit Sicherheitsgurten versehene Sitze vorgesehen sind, beispielsweise Flugzeuge, Schienenfahrzeuge, Busse, Nutzfahrzeuge wie LKWs oder Traktorfahrzeuge, Schiffen und sogar Fahrgeschäften in Freizeitparks, beispielsweise Achterbahnen.

Ein im Rahmen der Erfindung eingesetztes Gurtschloss kann ein einen Führungskanal aufweisendes Gehäuse aufweisen. Bei dem Gehäuse kann es sich um ein Innengehäuse handeln, das von einem schalenförmigen Außengehäuse umgeben ist. Das Innengehäuse ist vorzugsweise aus Metall gefertigt, während es sich bei dem Außengehäuse vorzugsweise aus einem Kunststoffbauteil handelt. Das Außengehäuse kann sich aus zwei Teilschalen zusammensetzen. Der Führungskanal kann dazu eingerichtet sein, die Gurtzunge bei einer bidirektionalen Bewegung zwischen einer Öffnungsstellung und einer Verriegelungsstellung zu führen. Dazu kann der Führungskanal in seinen Abmessungen an die Gurtzunge angepasst sein.

Ferner kann das Gurtschloss einen in eine Ausnehmung der Gurtzunge einrastbaren Riegel und ein die Bewegung der Gurtzunge aufnehmendes Betätigungselement zur Betätigung des Riegels aufweisen. Das Betätigungselement kann durch eine Druckfeder in Richtung der Öffnungsstellung vorgespannt sein, sodass die Gurtzunge bis zum Einrasten gegen die Kraft der Feder gegen das Betätigungselement gedrückt werden muss. Das Betätigungselement kann in dem Führungskanal des Gurtschlosses oder an anderer Stelle des Gurtschlosses beweglich geführt sein. Auch kann das Gurtschloss dahingehend ausgebildet sein, dass der Riegel unmittelbar durch eine Berührung der Gurtzunge betätigt wird. In diesem Fall kann auf ein Betätigungselement verzichtet werden. Bei Betätigung des Riegels rastet dieser in eine Ausnehmung bzw. Rastöffnung der Gurtzunge ein. Nach dem Einrasten ist die Gurtzunge und somit der Sicherheitsgurt im Gurtschloss verriegelt.

Weiterhin kann das Gurtschloss eine Lösevorrichtung zum Entriegeln des Riegels unter Freigabe der Gurtzunge aufweisen. Bei der Lösevorrichtung kann es sich beispielsweise um eine Lösetaste in Form einer Drucktaste handeln. Diese kann ebenfalls im Gehäuse des Gurtschlosses geführt sein. Eine Betätigung der Lösevorrichtung bewirkt eine Bewegung des Riegels in dessen zur Öffnungsstellung des Gurtschlosses korrespondierenden Ausgangsposition. Die Lösevorrichtung kann getreu aller gängiger Varianten von Lösevorrichtungen für Gurtschlösser ausgestaltet sein. Eine spezifische Ausgestaltungsform ist nicht Gegenstand dieser Erfindung.

Das der Erfindung zugrunde liegende System umfasst weiterhin einen ersten und zweiten in dem Gurtschloss positionsfest angeordneten RFID Transponder. Beispielsweise können die RFID Transponder unmittelbar am Gehäuse, sei es am Innengehäuse im Bereich des Führungskanals oder an einem das Innengehäuse umgebenden Außengehäuse befestigt sein. Die Transponder können durch eine Klebeverbindung oder mechanisch an bzw. im Gurtschloss befestigt sein. Die Transponder können an jeglichen Bauteilen des Gurtschlosses befestigt sein, solange diese eine feste, unbewegliche Position einnehmen. Das Akronym RFID steht für "radiofrequency identification". Grundsätzlich setzt sich ein solcher RFID Transponder aus einem Mikrochip, einem Kondensator zur vorübergehenden Energiespeicherung sowie einer RF-Antenne zusammen. Häufig ist der Kondensator in den Mikrochip integriert. Die RF-Antenne wird in Form einer Spule oder eines Dipols in einen Träger, beispielsweise eine Platine, eingebettet. Bei passiven Transpondern dient sie zur Energiegewinnung und Datenübertragung. Befindet sich der RFID Transponder in einem elektromagnetischen Feld, wird in der Antenne und somit im Mikrochip ein elektrischer Strom induziert. Dadurch wird die in den Mikrochip integrierte Elektronik aktiviert und erzeugt ein Antwortsignal in Form eines in das eingestrahlte elektromagnetische Feld aufmodulierten Signals, beispielsweise durch Feldschwächung im kontaktfreien Kurzschluss oder durch gegenphasige Reflexion des ausgesendeten Wechselfeldes. RFID Transponder können mit einem mehrfach beschreibbaren Datenspeicher ausgestattet sein.

Weiterer Bestandteil des Systems ist eine außerhalb des Gurtschlosses angeordnete, mit einer Auswerteeinheit verbundene RFID Leseeinheit. Die RFID Leseeinheit weist einen Transmitter und einen Receiver auf, ist also dahingehend ausgelegt die von ihr erzeugten elektromagnetischen Wechselfelder bzw. Hochfrequenzwellen über den Transmitter in Richtung der Transponder auszusenden. Zur Erzeugung der elektromagnetischen Wechselfelder ist der RFID Leseeinheit vorzugsweise ein Wechselfeldgenerator zugeordnet. Weiterhin können reflektierte Hochfrequenzwellen über den Receiver der RFID Leseeinheit empfangen werden. Weiterer Bestandteil der RFID Leseeinheit können Verstärkermodule und ein Analog-zu-Digital Wandler sein. Ihre Stromversorgung bezieht die RFID Leseeinheit aus der Fahrzeugbatterie oder einer autarken Energieversorgungseinrichtung, die ebenfalls eine Batterie sein kann.

Weiterer Bestandteil des erfindungsgemäßen Systems ist eine in dem Gurtschloss vorgesehenes Abschirmelement zur Abschirmung elektromagnetischer Wellen, die bei Bewegung der Gurtzunge von ihrer Öffnungsstellung in die Verriegelungsstellung von einer ersten Position in eine zweite Position verschiebbar ist. Bei dem Abschirmelement handelt es sich um eine Einrichtung zur Vermeidung des Hindurchtritts elektromagnetischer Wellen, insbesondere jener Wellen, die von der RFID Leseeinheit und den RFID Transpondern ausgetauscht werden. Das Abschirmelement kann in seiner Materialdicke an die Wellenlänge der elektromagnetischen Wechselfelder angepasst sein. Ein wichtiger dabei zu berücksichtigender Parameter ist die Skin-Tiefe des Materials. Vorteilhaft ist insbesondere ein aus Metall gefertigtes Abschirmelement. Besonders geeignet erscheinen Aluminium- und Kupferbleche. Diese können durch weitere Komponenten ergänzt werden, beispielsweise können die Bleche mit einer Silber-bedampften Folie überzogen werden, um besonders gute Abschirmeigenschaften zu verwirklichen. Das Abschirmelement ist nicht auf eine Ausgestaltung als Blech beschränkt, auch kann diese als engmaschiges Netz von Metalldrähten ausgebildet sein. Das Abschirmelement kann eine beliebige Form aufweisen und aus mehreren Bestandteilen aufgebaut sein. Vorzugsweise kommt ein Abschirmelement in Form einer Abschirmplatte in Betracht. Die Verschiebbarkeit des Abschirmelements kann in einem Führungskanal des Gurtschlosses erfolgen. Das Gurtschloss kann Führungsnute aufweisen, in welchen das Abschirmelement mit geeigneten Führungsleisten geführt ist. Auch eine auf einer Rollenführung basierende Führung ist vorstellbar.

Erfindungsgemäß weist das Abschirmelement eine erste Öffnung auf, die in der ersten Position des Abschirmelements mit dem ersten Transponder überlappt, wobei in dieser Position eine Signalverbindung zwischen dem ersten Transponder und der RFID Leseeinheit gewährleistet ist. Weiterhin weist das Abschirmelement eine zweite Öffnung auf, die in der zweiten Position des Abschirmelements mit dem zweiten Transponder überlappt, wobei in dieser Position eine Signalverbindung zwischen dem zweiten Transponder und der RFID Leseeinheit gewährleistet ist. Die erste Position des Abschirmelements korrespondiert zur Öffnungsstellung des Gurtschlosses, was bedeutet, dass die Gurtzunge des Sicherheitsgurts noch nicht in das Gurtschloss eingesteckt wurde. Die zweite Position korrespondiert zu einem Zustand bei dem die Gurtzunge in dem Gurtschloss verriegelt ist. Der verriegelte Zustand ist der Zustand des Sicherheitsgurtes, in dem der Sicherheitsgurt seine eigentliche Funktion, nämlich den Fahrzeuginsassen bei einem Unfall zu schützen, erfüllen kann. Dadurch, dass die Gurtzunge im Gurtschloss verriegelt ist und somit festgehalten wird, kann der Sicherheitsgurt eine Kraft aufnehmen, und den Insassen im Sitz fixieren. Eine Erkennung des verriegelten Zustandes ist deswegen wichtig, um einen sicheren Betrieb des Fahrzeuges gewährleisten zu können. In beiden Zuständen können die RFID Transponder durch die jeweilige erste und zweite Öffnung hindurchtretende elektromagnetische Wellen empfangen und aussenden bzw. reflektieren. Bei den Öffnungen kann es sich um Lochausnehmungen im Vollmaterial des Abschirmelements handeln, auch können sich die Öffnungen am Rand des Abschirmelements bzw. der Abschirmplatte befinden, beispielsweise nach Art einer Teilausnehmung. Ein entscheidender Aspekt der Erfindung ist, dass in der jeweiligen ersten oder zweiten Position des Abschirmelements nur zwischen einem der Transponder und der RFID Leseeinheit eine Signalverbindung aufgebaut wird. Dadurch kann eine selektive und zuverlässige Aussage darüber getroffen werden, in welcher Position sich das Abschirmelement und damit die Gurtzunge befindet.

Befindet sich das Abschirmelement beispielsweise in der zweiten Position, also in jener zur Verriegelungsstellung der Gurtzunge im Gurtschloss korrespondierenden Stellung, so treten die von der RFID Leseeinheit kontinuierlich ausgesendeten elektromagnetischen Wellen durch die zweite Öffnung des Abschirmelements hindurch und werden ausschließlich vom zweiten Transponder empfangen bzw. reflektiert bzw. entsprechende Signale werden von dem zweiten Transponder in Richtung der RFID Leseeinheit zurückgesendet. Der erste Transponder ist in dieser Position vom Abschirmelement abgeschirmt. Befindet sich das Abschirmelement in der ersten Position, also jener zur Öffnungsstellung des Gurtschlosses korrespondierenden Position, so treten von der RFID Leseeinheit ausgesendete elektromagnetische Wellen nur durch die erste Öffnung des Abschirmelements hindurch. Entsprechend werden diese nur von dem ersten Transponder empfangen und reflektiert bzw. entsprechende Signale werden von dem ersten Transponder in Richtung der RFID Leseeinheit zurückgesendet.

Bei Vorliegen einer Zwischenposition des Abschirmelements zwischen der ersten und zweiten Position überlappt der erste und zweite Transponder zumindest teilweise mit der ersten bzw. zweiten Öffnung. In dieser Zwischenstellung empfangen also beide RFID Transponder die von der RFID Leseeinheit ausgesendeten elektromagnetischen Wellen. Gleichsam empfängt die RFID Leseeinheit von beiden RFID Transpondern reflektierte und/oder ausgesendete elektromagnetische Wellen. Durch den Empfang der Antwortsignale des ersten und zweiten Transponders lässt sich das Vorliegen einer Zwischenposition des Abschirmelements von dem Vorliegen der ersten und zweiten Position in der Öffnungsstellung bzw. Verriegelungsstellung des Gurtschlosses differenzieren. Empfängt die RFID Leseeinheit Signale oder Reflexionssignale beider Transponder, so befindet sich die Gurtzunge zwar in dem Gurtschloss, ist jedoch nicht verriegelt. Ein solcher Zustand kann beim Einstecken der Gurtzunge in das Gurtschloss kurz vor dem Verriegeln gewährleistet sein. Gleichsam beim Herausführen der Gurtzunge aus dem Gurtschloss nach dem Lösen der Verriegelung.

Erfindungsgemäß ist die Auswerteeinheit dazu eingerichtet anhand der von den Transpondern an die RFID Leseeinheit übermittelten Informationen eine Systembewertung hinsichtlich des Verriegelungs- und/oder Funktionszustands vorzunehmen. Die Auswerteeinheit registriert und analysiert, ob ausschließlich Signale des ersten oder zweiten Transponders oder alternativ beider Transponder von der RFID Leseeinheit empfangen werden. In Abhängigkeit dessen nimmt sie eine Systembewertung vor. Liegen ausschließlich Signale des ersten Transponders vor, so erkennt die Auswerteeinheit, dass sich der Sicherheitsgurt bzw. das Gurtschloss in der Öffnungsstellung befindet. Liegen ausschließlich Signale des zweiten Transponders vor, so erkennt die Auswerteeinheit, dass sich der Sicherheitsgurt bzw. das Gurtschloss in der Verriegelungsstellung befindet. Liegen Signale des ersten und zweiten Transponders vor, so erkennt die Auswerteeinheit, dass sich der Sicherheitsgurt bzw. das Gurtschloss in einer Zwischenstellung zwischen der Öffnungs- und Verriegelungsstellung befindet. Liegen weder Signale des ersten und zweiten Transponders vor, so erkennt die Auswerteeinheit, dass ein fehlerhafter Funktionszustand des Gurtschlosses bzw. des Systems vorliegt. Diese Fehlermeldung kann dem Fahrzeugführer im Cockpit durch ein optisches oder akustisches Warnsignal angezeigt werden. Auch das Vorliegen einer Öffnungsstellung des Gurtschlosses kann im Fahrzeugcockpit angezeigt werden, insbesondere in jenem Fall in dem ein zugehöriger Fahrzeugsitz von einem Fahrzeuginsassen besetzt ist. Das ein Fahrzeuginsasse auf einem Fahrzeugsitz Platz genommen hat, kann durch weitere im Fahrzeug oder im Fahrzeugsitz vorgesehene Sensoren erfasst werden, beispielsweise durch Gewichtssensoren oder optische Sensorelemente.

Weitere vorteilhafte Ausgestaltungen der Erfindung sind in den Unteransprüchen angegeben.

Nach einer vorteilhaften Ausgestaltung kann das Gurtschloss folgenden Bestandteile aufweisen: ein einen Führungskanal aufweisendes Gehäuse, wobei der Führungskanal dazu eingerichtet ist, die Gurtzunge bei einer bidirektionalen Bewegung zwischen der Öffnungsstellung und der Verriegelungsstellung zu führen, einen in eine Ausnehmung der Gurtzunge einrastbaren Riegel, ein die Bewegung der Gurtzunge aufnehmendes Betätigungselement zur Betätigung des Riegels und eine Lösevorrichtung zum Entriegeln des Riegels unter Freigabe der Gurtzunge. Einzelheiten dazu wurden bereits eingangs erläutert. Grundsätzlich sei erwähnt, dass eine Vielzahl verschiedener Ausgestaltungsmöglichkeiten für Gurtschlösser gibt. Die vorliegende Erfindung ist nicht auf eine bestimmte Gurtschlossform beschränkt.

Nach einer weiteren vorteilhaften Ausgestaltung der Erfindung ist im Falle einer zumindest teilweisen Überlappung der ersten und/oder zweiten Öffnung mit dem ersten und/oder zweiten Transponder eine auf elektromagnetischen Wellen basierende Signalverbindung zwischen dem ersten und/oder zweiten RFID Transponder und der RFID Leseeinheit gewährleistet, wobei der erste und/oder zweite Transponder zumindest teilweise nicht abgeschirmt ist. Bei einer Überlappung der ersten Öffnung mit dem ersten RFID Transponder können die von der RFID Leseeinheit ausgesendeten Wellen durch die erste Öffnung hindurchtreten und seitens des ersten RFID Transponders empfangen werden. Gleichsam können die Wellen von dem ersten RFID Transponder reflektiert oder entsprechende elektromagnetische Wellen zurückgesendet werden, die die erste Öffnung erneut passieren und von der RFID Leseeinheit empfangen werden können. Bei einer Überlappung der zweiten Öffnung mit dem zweiten RFID Transponder können die von der RFID Leseeinheit ausgesendeten Wellen durch die zweite Öffnung hindurchtreten und seitens des zweiten RFID Transponders empfangen werden. Gleichsam können die Wellen von dem zweiten RFID Transponder reflektiert oder entsprechende elektromagnetische Wellen zurückgesendet werden, die die zweite Öffnung erneut passieren und von der RFID Leseeinheit empfangen werden können. Überlappen die erste Öffnung und die zweite Öffnung zumindest teilweise mit dem ersten und zweiten Transponder so können die von der RFID Leseeinheit ausgesendeten Wellen durch die erste und zweite Öffnung hindurchtreten und seitens des ersten und zweiten RFID Transponders empfangen werden. Gleichsam können die Wellen von dem ersten und zweiten RFID Transponder reflektiert oder entsprechende elektromagnetische Wellen zurückgesendet werden, die die erste und zweite Öffnung erneut passieren und von der RFID Leseeinheit empfangen werden können.

Entsprechend können also in der ersten und zweiten Position sowie in der Zwischenposition elektromagnetische Wellen durch die erste und/oder zweite Öffnung hindurchtreten. Die erste Position des Abschirmelements kennzeichnet einen Öffnungszustand des Gurtschlosses, während die zweite Position einen Verriegelungszustand des Gurtschlosses bezeichnet. Das Abschirmelement ist zwischen der ersten und zweiten Position verschiebbar.

Nach einer weiteren vorteilhaften Ausgestaltung der Erfindung weist die RFID Leseeinheit ein Transmit-Receive Modul auf, welches auf elektromagnetischen Wellen basierende Signale kontinuierlich in Richtung des ersten und zweiten RFID Transponders aussendet und vermöge dessen seitens der Transponder ausgesendete Signale kontinuierlich empfangbar sind. Das Aussenden der RFID Signale kann jedoch auf jene Zeiträume begrenzt sein, in denen sich das Fahrzeug im Betrieb befindet. Dies bedeutet, dass die RFID Signale erst ab jenem Zeitpunkt von der RFID Leseeinheit ausgesendet werden, bei dem das Fahrzeug geöffnet oder gestartet wird. Der Betrieb der RFID Leseeinheit kann an die Energieversorgung des Fahrzeugs gekoppelt sein, sodass die RFID Leseeinheit erst beim Starten der Zündung mit dem Aussenden der elektromagnetischen Wellen beginnt und die Empfangskanäle öffnet.

Nach einer weiteren vorteilhaften Ausgestaltung der Erfindung besteht in der Öffnungsstellung des Gurtschlosses bzw. der Gurtzunge ausschließlich eine Signalverbindung zwischen der RFID Leseeinheit und dem ersten Transponder. Sodann wird seitens der Auswerteeinheit eine Systembewertung dahingehend vorgenommen wird, dass eine Öffnungsstellung des Gurtschlosses bzw. der Gurtzunge vorliegt. Das Vorliegen der Öffnungsstellung des Gurtschlosses bzw. der Gurtzunge ist als optisches oder akustisches Warnsignal im Fahrzeugcockpit anzeigbar. Insbesondere ist eine solche Anzeige dann sinnvoll, wenn ein Fahrzeuginsasse einen Fahrzeugsitz besetzt hat. Somit kann der Fahrzeuginsasse darauf aufmerksam gemacht werden, dass er den Sicherheitsgurt noch nicht ordnungsgemäß angelegt bzw. verschlossen hat.

Nach einer weiteren vorteilhaften Ausgestaltung besteht in der Verriegelungsstellung des Gurtschlosses bzw. der Gurtzunge ausschließlich eine Signalverbindung zwischen der RFID Leseeinheit und dem zweiten Transponder. Seitens der Auswerteeinheit kann sodann eine Systembewertung dahingehend vorgenommen werden, dass eine Verriegelungsstellung des Gurtschlosses bzw. der Gurtzunge vorliegt. Auch das Vorliegen der Verriegelungsstellung des Gurtschlosses bzw. der Gurtzunge ist als optisches oder akustisches Signal im Fahrzeugcockpit anzeigbar. Insbesondere kann ein Wechsel von der Öffnungsstellung in die Verriegelungsstellung, also das Einrasten der Gurtzunge im Fahrzeugcockpit im Sinne eines Bestätigungssignals oder OK-Signals angezeigt werden. Das Bestätigungssignal bzw. OK-Signal bestätigt ein ordnungsgemäß verriegeltes Sicherheitsgurtsystem.

Nach einer weiteren vorteilhaften Ausgestaltung der Erfindung besteht in der Zwischenposition des Abschirmelements eine Signalverbindung zwischen der RFID Leseeinheit und dem ersten und zweiten Transponder. Die Auswerteeinheit ist dazu eingerichtet ist, in diesem Fall eine Systembewertung dahingehend vorzunehmen, dass sich die Gurtzunge zwischen der Öffnungs- und Verriegelungsstellung befindet.

Nach einer weiteren vorteilhaften Ausgestaltung der Erfindung kann die Auswerteeinheit dazu eingerichtet sein, in jenem Falle in dem weder eine Signalverbindung zwischen dem ersten Transponder und der RFID Leseeinheit noch eine Signalverbindung zwischen dem zweiten Transponder und der RFID Leseeinheit besteht, eine Systembewertung dahingehend vorzunehmen, dass ein Fehlerstatus vorliegt. Auch dies ist im Fahrzeugcockpit durch ein optisches oder akustisches Warnsignal anzeigbar. Beim Auftreten eines Fehlerstatus kann ein beschädigtes Gurtschloss, eine beschädigte Gurtzunge, ein beschädigter RFID Transponder und/oder ein beschädigtes Abschirmelement vorliegen. Somit erlaubt das erfindungsgemäße System eine zuverlässige Differenzierung zwischen einem Verriegelungszustand, der eine Öffnungsstellung und eine Verriegelungsstellung des Gurtschlosses betreffen kann, und einem Funktionszustand des Gurtschlosses bzw. des erfindungsgemäßen Systems.

Nach einer weiteren vorteilhaften Ausgestaltung handelt es sich bei dem ersten und zweiten Transponder um passive RFID Transponder. Damit werden die RFID Transponder durch die empfangenden elektromagnetischen Wellen mit Energie versorgt. Diese induzieren in einer Empfangsantenne der Transponder einen elektrischen Strom, der zur Energieversorgung der Transponder herangezogen werden kann. Somit kann auf eine zusätzliche Energieversorgungseinheit für jeden einzelnen Transponder verzichtet werden. Entsprechend können die Transponder in ihrer Baugröße reduziert werden.

Nach einer weiteren vorteilhaften Ausgestaltung der Erfindung umfasst das Abschirmelement eine zwei Öffnungen oder Materialausnehmungen aufweisende Abschirmplatte. Diese ist vorzugsweise aus Metallblech gefertigt. Bei der Fertigung können die Öffnungen in die Metallplatte eingestanzt werden. Als Metalle kommen insbesondere Aluminium und Kupfer in Betracht. Auch können Metalllegierungen verwendet werden. Die Abschirmplatte kann mit zusätzlichen Komponenten modifiziert werden, um die Abschirmeigenschaften für elektromagnetische Wellen zu erhöhen. Als Beispiel sei die Applikation des Metallblechs mit einer silberbedampften Folie erwähnt. Auch kann die Dicke des Metallblechs variiert werden, um die Abschirmung an die Wellenlänge der von der RFID Leseeinheit ausgesendeten elektromagnetischen Wellen anzupassen.

Nach einer weiteren vorteilhaften Ausgestaltung der Erfindung sind der erste und zweite RFID Transponder in einem Abschirmgehäuse angeordnet sind, wobei das Abschirmgehäuse in Richtung der Abschirmplatte geöffnet ist. Vorzugsweise ist das jeweilige Abschirmgehäuse positionsfest in dem Gurtschloss angeordnet, bildet also mit den jeweiligen Transpondern eine positionsfeste Einheit. Das Abschirmgehäuse schirmt den Transponder zu fünf Seiten ab, jedoch nicht in Richtung der Abschirmplatte bzw. des Abschirmelements. In dieser Richtung wird die Abschirmung von dem Abschirmelement übernommen.

Nach einer weiteren Ausgestaltung der Erfindung ist die Abschirmplatte relativ zu dem Abschirmgehäuse verschiebbar ist. Erst durch die Verschiebbarkeit der Abschirmplatte wird gewährleistet, dass in unterschiedlichen Verriegelungszuständen selektiv ein bestimmter Transponder mit einer in der Abschirmplatte vorgesehenen Öffnung überlappen kann. Erst dadurch wird gewährleistet, dass in der Öffnungsstellung des Gurtschlosses bzw. der zugehörigen ersten Position des Abschirmelements, ausschließlich eine Signalverbindung zwischen der RFID Leseeinheit und dem ersten Transponder zustande kommt. Gleiches gilt für die Verriegelungsstellung und die damit einhergehende zweite Position des Abschirmelements, bei der ausschließlich eine Signalverbindung zwischen der RFID Leseeinheit und dem zweiten Transponder zustande kommt.

Nach einer weiteren vorteilhaften Ausgestaltung ist das Abschirmelement gegen die Kraft einer Druckfeder von der ersten Position in die zweite Position verschiebbar. Dadurch wird die Abschirmplatte bei nicht verriegeltem Gurtschloss in der ersten Position gehalten.

Nach einer weiteren vorteilhaften Ausgestaltung der Erfindung wird das Abschirmelement bei Bewegung der Gurtzunge von ihrer Öffnungsstellung in die Verriegelungsstellung von der Gurtzunge oder einem mit dieser in Wirkverbindung stehenden Übertragungselement mitgenommen. Dadurch ist ermöglicht, das Abschirmelement - in Abhängigkeit der Stellung der Gurtzunge - in eine Position zu verbringen, bei der selektiv eine Signalverbindung zwischen einem dieser Position zugeordneten RFID Transponder und der RFID Leseeinheit gewährleistet ist. Dadurch ist eine positionsabhängige Statusanzeige des Sicherheitsgurtsystems ermöglicht.

Ergänzend sei darauf hingewiesen, dass Begriffe, wie "umfassend" "aufweisen" oder "mit" keine anderen Merkmale oder Schritte ausschließen. Ferner schließen Begriffe "ein" oder "das", die auf einer Einzahl von Schritten oder Merkmalen hinweisen, keine Mehrzahl von Merkmalen oder Schritten aus und umgekehrt.

Weitere Vorteile der Erfindung sind anhand mehrerer einzelner Aspekte des erfindungsgemäßen Systems anhand entsprechender Ausführungsbeispiele beschrieben. Es zeigen:
- **Figur 1**: eine schematische Darstellung eines aus dem Stand der Technik bekannten, einem Fahrzeugsitz zugeordneten Sicherheitsgurtsystems;
- **Figur 2a**: eine schematische Darstellung des erfindungsgemäßen Systems in einer Öffnungsstellung des Sicherheitsgurts;
- **Figur 2b**: eine schematische Darstellung des erfindungsgemäßen Systems in einer Verriegelungsstellung des Sicherheitsgurts;
- **Figur 3a**: eine schematische Darstellung eines dem erfindungsgemäßen System zugeordneten Gurtschlosses in der Öffnungsstellung;
- **Figur 3b**: eine schematische Darstellung eines dem erfindungsgemäßen System zugeordneten Gurtschlosses in der Verriegelungsstellung.

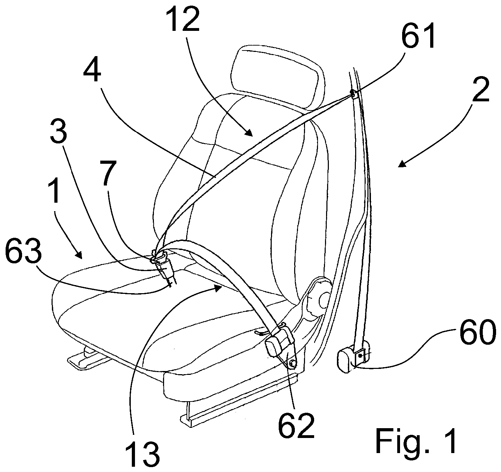

In der Figur 1 ist in schematischer Ansicht ein Sitz 1 eines Kraftfahrzeugs mit einem zugehörigen Sicherheitsgurtsystem 2 dargestellt. Derartige Sicherheitsgurtsysteme 2 können ohne Weiteres auch für die Sitze anderer Transportmittel verwendet werden. Abgestellt sei beispielsweise auf einen Einsatz bei Flugzeugsitzen, in Schiffen verbauten Sitzen, Sitzen von Schienenfahrzeugen und des Weiteren von Bussen, Lastkraftwagen und Agrarfahrzeugen. Auch in Fahrgeschäften von Freizeitparkt, beispielsweise Achterbahnen, kann ein derartiges Gurtsystem zum Einsatz kommen. In der Figur 1 ist ein Dreipunktgurtsystem dargestellt, das erfindungsgemäße System kann aber auch bei anderen Gurtsystemen zum Einsatz kommen, ist also keineswegs auf Dreipunktgurtsysteme beschränkt.

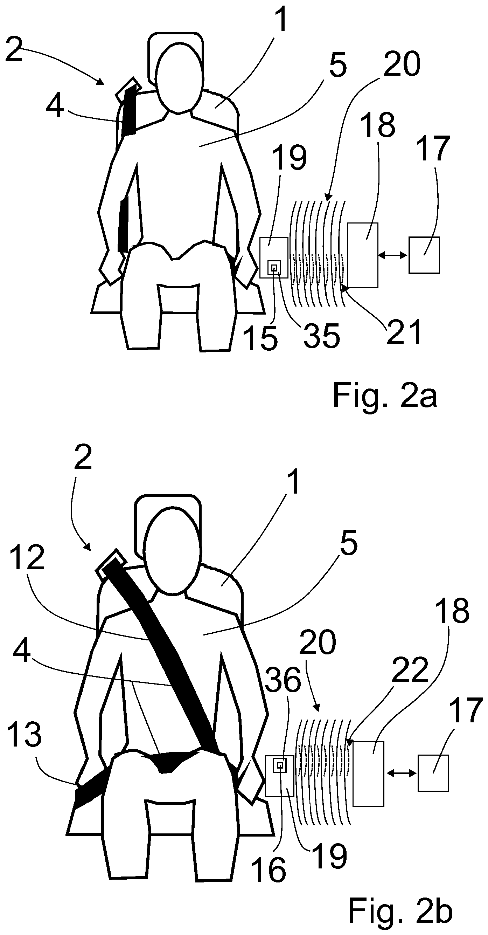

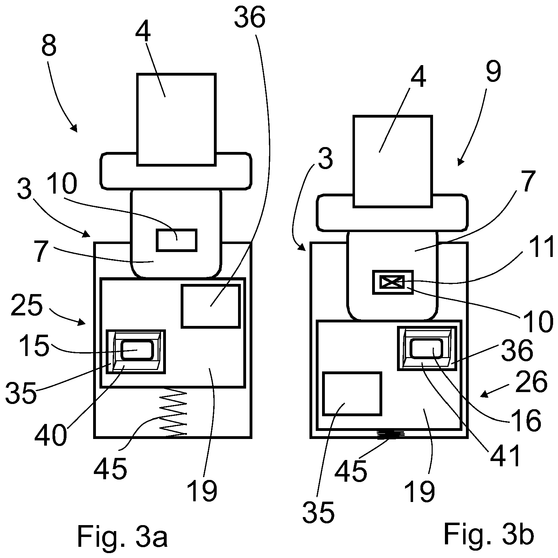

In Figur 1 ist der Sicherheitsgurt 4 im angelegten Zustand gezeigt, d.h. eine dem Sicherheitsgurt 4 zugeordnete Gurtzunge 7 ist in ein Gurtschloss 3 eingesteckt und verriegelt. Zur Verriegelung rastet ein Riegel 11 in eine Ausnehmung 10 der Gurtzunge 7 ein (Fig. 3a, 3b). Auf die Darstellung eines Fahrzeuginsassen, den der Sicherheitsgurt 4 umgibt, wurde in der Darstellung nach Fig. 1 verzichtet, verwiesen sei hierzu auf die Figuren 2a, 2b, in welchen ein Fahrzeuginsasse 5 dargestellt ist.

Im angelegten Zustand ist der Sicherheitsgurt 4 in einen Schulter-Brustgurtbereich 12 und einen Beckengurtbereich 13 unterteilt. Der Fahrzeuginsasse 5 ist dann über drei Punkte an die Karosserie des Kraftfahrzeugs angebunden. Ein erster Anbindungspunkt kann dabei von einem Gurtaufroller 60 bzw. ein in dessen Nähe vorgesehenes Umlenkelement 61 gebildet. Über den Gurtaufroller 60 ist der Sicherheitsgurt 4 auf- und abrollbar. Ein zweiter Anbindungspunkt wird durch einen Endbeschlag 62 im Bereich der B-Säule des Fahrzeugs gebildet. Ein dritter Anbindungspunkt kann von dem Gurtschloss 3 gebildet sein, welches vornehmlich über eine Gurtpeitsche 63 sitz- oder fahrzeugseitig verankert ist.

In den Figuren 2a und 2b ist das erfindungsgemäße System mit seinen wesentlichen Komponenten in einer stark schematisierten Darstellung wiedergegeben.

Bei dem erfindungsgemäßen System handelt es sich bekanntlich um ein System zur Erkennung des Verriegelungs- und/oder Funktionszustandes eines einem Sitz 1 eines Kraftfahrzeugs zugeordneten Sicherheitsgurtsystems 2. Wie eingangs erläutert, meint die Erkennung eines Verriegelungszustands dabei eine Differenzierung zwischen jenem Zustand, bei dem der Sicherheitsgurt angelegt ist (Fig. 2b) und eine dem Sicherheitsgurt 4 zugeordnete Gurtzunge 7 in einem fahrzeug- oder sitzseitig befestigten Gurtschloss 3 verriegelt ist (Verriegelungsstellung 9) oder sich die Gurtzunge 7 in einem nicht-verriegelten Zustand Gurtschlosses 3 befindet (Öffnungsstellung 8), siehe z.B. Fig. 2a. Wie in der Figur 3b schematisch wiedergegeben greift in der Verriegelungsstellung 9 ein Riegel 11 in eine Ausnehmung 10 der Gurtzunge 7 ein.

Die Öffnungsstellung 8 meint im Sinne der Erfindung jene Stellung, bei der die Gurtzunge 7 noch nicht mit den Komponenten des Gurtschlosses 3 zusammenwirkt. Die Gurtzunge 7 kann sich also in der Öffnungsstellung außerhalb des Gurtschlosses befinden (z. B. bei einem nicht angelegten Sicherheitsgurt 4 gemäß der Darstellung nach Fig. 2a). Jedoch kann eine Öffnungsstellung 8 aber auch dann vorliegen, wenn die Gurtzunge 7 bereits teilweise in das Gurtschloss 3 eingesteckt sein. In diesem Fall liegt eine Öffnungsstellung nur dann vor, wenn die Gurtzunge 7 noch nicht mit den Komponenten des Gurtschlosses 3 zusammenwirkt, also ohne jeglichen Kraft- oder Betätigungsaufwand aus dem Gurtschloss 3 entnommen werden kann.

Mit dem erfindungsgemäßen System lässt sich zudem eine Zwischenstellung feststellen, bei der die Gurtzunge 7 zwar nicht in dem Gurtschloss 3 verriegelt ist, sich jedoch innerhalb des Gurtschlosses 3 befindet und bereits mit Komponenten des Gurtschlosses 3 zusammenwirkt, also auf seinem Weg in die Verriegelungsstellung 9 ist. Insbesondere meint die Zwischenstellung jene Stellung der Gurtzunge 7, bei der sie ein Abschirmelement 19 oder Betätigungselement gegen die Kraft einer Feder 45 verschiebt. Insbesondere ist mit der Zwischenstellung jene Position gemeint, bei dem das Abschirmelement 19 zwischen einer ersten Position 25 und einer zweiten Position 26 bewegt wird (Fig. 3a, 3b). Wie in den Figuren 3a und 3b dargestellt, kann das Abschirmelement 19 entgegen der Kraft einer Feder 45, insbesondere einer Druckfeder, aus einer ersten Position 25 (Fig. 3a) in Richtung einer zweiten Position 26 (Fig. 3b) verschoben werden. Das Abschirmelement 19 kann dabei durch direkte Einwirkung der Gurtzunge 7 verschoben werden, oder alternativ über ein mit der Gurtzunge zusammenwirkendes Zwischenelement (nicht dargestellt). Die erste Position 25 des Abschirmelements 19 korrespondiert zur Öffnungsstellung 8 des Gurtschlosses 3, während die zweite Position 26 des Abschirmelements 19 zur Verriegelungsstellung 9 des Gurtschlosses 3 korrespondiert.

Ferner kann mit dem erfindungsgemäßen System der Funktionszustand des Sicherheitsgurtsystems 2 bestimmt werden, insbesondere lässt sich damit feststellen, ob das Gurtschloss 3 oder ein zugehöriges Bauteil beschädigt ist. Mit dem der hiesigen Erfindung zugrunde liegenden System kann also eine Differenzierung zwischen dem Vorliegen eines bestimmten Verriegelungszustandes (Öffnungsstellung, Verriegelungsstellung, Zwischenstellung) und eines Funktionszustandes (Beschädigung) vorgenommen werden kann. Die konkrete Funktionsweise sei im Folgenden genauer erläutert.

Das der Erfindung zugrunde liegende System umfasst neben den vorgenannten Bestandteilen einen ersten RFID Transponder 15 und zweiten RFID Transponder 16, die in oder an dem Gurtschloss 3 positionsfest angeordnet sind. In den Figuren 2a und 2b ist das Gurtschloss 3 nicht dargestellt, dieses ist aber durch eine schematische Repräsentation des Abschirmelements 19 wiedergegeben. Die Figuren 2a, 2b wie auch die Figuren 3a, 3b sollen lediglich zur Erläuterung des Funktionsprinzips herangezogen werden. Sie geben keinerlei Hinweise auf die konkrete Anordnung oder Position des Gurtschlosses 3. Grundsätzlich setzen sich die RFID Transponder 15, 16 aus einem Mikrochip, einem Kondensator zur vorübergehenden Energiespeicherung sowie einer RF-Antenne zusammen. Befindet sich einer der RFID Transponder 15, 16 in einem elektromagnetischen Feld bzw. treffen elektromagnetische Wellen 20 auf einen der RFID Transponder 15, 16 ein, wird in der Antenne und somit im Mikrochip ein elektrischer Strom induziert. Dadurch wird die in den Mikrochip integrierte Elektronik aktiviert und erzeugt ein Antwortsignal in Form eines in das eingestrahlte elektromagnetische Feld aufmodulierten Signals, beispielsweise durch Feldschwächung im kontaktfreien Kurzschluss oder durch gegenphasige Reflexion des ausgesendeten Wechselfeldes. Zurückgesendete elektromagnetische Wellen, die gleichsam eine Signalreflexion repräsentieren, sind in den Figuren 2a und 2b mit den Bezugszeichen 21 und 22 bezeichnet.

Wie die Figuren 2a und 2b zu erkennen geben, ist umfasst das der Erfindung zugrunde liegende System eine außerhalb des Gurtschlosses 3 angeordnete, mit einer Auswerteeinheit 17 signaltechnisch verbundene RFID Leseeinheit 18. Die RFID Leseeinheit 18 kann an einer beliebigen Stelle des Fahrzeugs vorgesehen sein, solange eine Signalkommunikation mit den RFID Transpondern 15, 16 gewährleistet ist. Die RFID Leseeinheit 18 weist einen Transmitter und einen Receiver auf, ist also dahingehend ausgelegt die von ihr erzeugten elektromagnetischen Wechselfelder 20 bzw. Hochfrequenzwellen über den Transmitter in Richtung der RFID Transponder 15, 16 auszusenden. Zur Erzeugung der elektromagnetischen Wechselfelder ist der RFID Leseeinheit 18 vorzugsweise ein Wechselfeldgenerator zugeordnet. Weiterhin können von den RFID Transpondern 15, 16 reflektierte bzw. zurückgesendete Hochfrequenzwellen 21, 22 über den Receiver der RFID Leseeinheit 18 empfangen werden.

In dem Gurtschloss 3 ist ein Abschirmelement 19 zur Abschirmung elektromagnetischer Wellen vorgesehen. Das Abschirmelement kann beispielsweise eine Abschirmplatte sein. Das Abschirmplatte ist in Fig. 2a und 2b rein schematisch dargestellt, um die Funktionsweise des erfindungsgemäßen Systems bei Vorliegen eines nicht angelegten Sicherheitsgurts 4, also in einem Öffnungsstellung 8 des Gurtschlosses 3, und einem angelegten Sicherheitsgurt 4, also in einer Verriegelungsstellung 9 des Gurtschlosses 3, zu erläutern. Wie u.a. in den Figuren 3a und 3b gezeigt, wird das Abschirmelement 19 bei Bewegung der Gurtzunge 7 von ihrer Öffnungsstellung 8 in die Verriegelungsstellung 9 von einer ersten Position 25 in eine zweite Position 26 verschoben. Die Verschiebung des Abschirmelements 19 ist in den Figuren 2a, 2b nicht wiedergegeben.

Bei dem Abschirmelement 19 handelt es sich um eine Einrichtung zur Vermeidung des Hindurchtritts elektromagnetischer Wellen 20, 21, 22, insbesondere jener Wellen 20, 21, 22, die zwischen der RFID Leseeinheit 18 und den RFID Transpondern 15, 16 ausgetauscht werden.

Die Verschiebung des Abschirmelements 19 kann in einem (nicht dargestellten) Führungskanal des Gurtschlosses 3 erfolgen. Wie in den Figuren 2a, 2b und 3a, 3b illustriert, weist das Abschirmelement 19 eine erste Öffnung 35 auf, die in der ersten Position 25 des Abschirmelements 19 mit dem ersten Transponder 15 überlappt. In dieser Position 25 werden die von der RFID Leseeinheit 18 ausgesendeten elektromagnetischen Wellen 20 von dem ersten RFID Transponder 15 empfangen. Sodann ist eine Signalverbindung zwischen dem ersten RFID Transponder 15 und der RFID Leseeinheit 19 gewährleistet. Wie in Figur 2a wiedergegeben, können die elektromagnetischen Wellen 20, 21 durch die erste Öffnung 35 des Abschirmelements 19 hindurchtreten. In dieser Position ist der zweite RFID Transponder 16 von dem Abschirmelement 19 in Richtung der RFID Leseeinheit 18 abgeschirmt, siehe hierzu auch die Darstellung nach Figur 3a. Somit kann in dieser Position zwischen der RFID Leseeinheit 18 und dem zweiten Transponder 16 keine Signalverbindung aufgebaut werden.

Weiterhin weist das Abschirmelement 19 eine zweite Öffnung 36 auf, die in der zweiten Position 26 des Abschirmelements mit dem zweiten Transponder 16 überlappt (Fig. 2b, 3b). In dieser Position 26 werden die von der RFID Leseeinheit 18 ausgesendeten elektromagnetischen Wellen 20 von dem zweiten RFID Transponder 16 empfangen. Sodann ist eine Signalverbindung zwischen dem zweiten RFID Transponder 16 und der RFID Leseeinheit 19 gewährleistet. Wie in Figur 2b wiedergegeben, können die elektromagnetischen Wellen 20, 22 durch die zweite Öffnung 36 des Abschirmelements 19 hindurchtreten. In dieser Position ist der erste RFID Transponder 15 von dem Abschirmelement 19 in Richtung der RFID Leseeinheit 18 abgeschirmt, siehe hierzu auch die Darstellung nach Figur 3b. Somit kann in dieser Position zwischen der RFID Leseeinheit 18 und dem ersten Transponder 15 keine Signalverbindung aufgebaut werden.

Die erste Position des Abschirmelements korrespondiert zur Öffnungsstellung 8 des Gurtschlosses 3. Wie in der Figur 3a wiedergegeben ist das Abschirmelement 19 durch eine Druckfeder 45 in Richtung der ersten Position 25 vorgespannt. Diese Position des Abschirmelements 19 korrespondiert zur Öffnungsstellung 8 des Gurtschlosses 3. Die zweite Position 26 des Abschirmelements 19 (Fig. 3b) korrespondiert zu einem Zustand bei dem die Gurtzunge 7 in dem Gurtschloss 3 verriegelt ist. In beiden Zuständen können die RFID Transponder 15, 16 durch die jeweilige erste und zweite Öffnung 35, 36 hindurchtretende elektromagnetische Wellen 20, 21, 22 empfangen und aussenden bzw. reflektieren.

Ein entscheidender Aspekt der Erfindung ist, dass in der jeweiligen ersten Position 25 oder zweiten Position 26 des Abschirmelements 19 nur zwischen einem der RFID Transponder 15, 16 und der RFID Leseeinheit 19 eine Signalverbindung aufgebaut wird. Dadurch kann eine selektive und zuverlässige Aussage darüber getroffen werden, in welcher Position 25, 26 sich das Abschirmelement und damit die Gurtzunge 7 befindet. Daraus kann über die Auswerteeinheit 17 abgeleitet werden, ob sich das Gurtschloss 3 in der Öffnungsstellung 8 oder Verriegelungsstellung 9 befindet. Befindet sich das Abschirmelement 19 beispielsweise in der zweiten Position 26, also in jener zur Verriegelungsstellung 9 der Gurtzunge 7 im Gurtschloss 3 korrespondierenden Stellung, so treten die von der RFID Leseeinheit 18 kontinuierlich ausgesendeten elektromagnetischen Wellen 20 durch die zweite Öffnung 36 des Abschirmelements 19 hindurch und werden ausschließlich vom zweiten Transponder 16 empfangen bzw. reflektiert bzw. entsprechende Signale 22 werden von dem zweiten Transponder 16 in Richtung der RFID Leseeinheit 18 zurückgesendet. Der erste Transponder 15 ist in dieser Position vom Abschirmelement 19 abgeschirmt. Befindet sich das Abschirmelement 19 in der ersten Position 25, also jener zur Öffnungsstellung 8 des Gurtschlosses 3 korrespondierenden Position, so treten von der RFID Leseeinheit 18 ausgesendete elektromagnetische Wellen 20 nur durch die erste Öffnung des Abschirmelements 19 hindurch. Entsprechend werden diese nur von dem ersten Transponder 15 empfangen und reflektiert bzw. entsprechende Signale 21 werden von dem ersten RFID Transponder 15 in Richtung der RFID Leseeinheit 18 zurückgesendet.

Wie in der Figur 3a und 3b wiedergegeben ist erste RFID Transponder 15 und der zweite RFID Transponder 16 in einem jeweiligen Abschirmgehäuse 40, 41 angeordnet, wobei das Abschirmgehäuse 40, 41 in Richtung der Abschirmplatte bzw. des Abschirmelements 19 geöffnet ist. Vorzugsweise ist das jeweilige Abschirmgehäuse 40, 41 positionsfest in dem Gurtschloss 3 angeordnet, bildet also mit den jeweiligen RFID Transpondern 15, 16 eine positionsfeste Einheit. Das Abschirmgehäuse 40, 41 schirmt den jeweiligen RFID Transponder 15, 16 zu fünf Seiten ab, jedoch nicht in Richtung der Abschirmplatte bzw. des Abschirmelements 19. In dieser Richtung wird die Abschirmung von dem Abschirmelement 19 übernommen.

Bei Vorliegen einer Zwischenposition des Abschirmelements 19 zwischen der ersten Position 25 (Fig. 3a) und zweiten Position 26 (Fig. 3b) überlappt der erste Transponder 15 und der zweite Transponder 16 zumindest teilweise mit der ersten bzw. zweiten Öffnung 35, 36. In dieser Zwischenstellung empfangen also beide RFID Transponder 15, 16 die von der RFID Leseeinheit 18 ausgesendeten elektromagnetischen Wellen 20. Gleichsam empfängt die RFID Leseeinheit 18 von beiden RFID Transpondern 15, 16 reflektierte und/oder ausgesendete elektromagnetische Wellen 21, 22. Durch den Empfang der Antwortsignale 21, 22 des ersten Transponders 15 und des zweiten Transponders 16 lässt sich das Vorliegen einer Zwischenposition des Abschirmelements 19 von dem Vorliegen der ersten und zweiten Position 25, 26 in der Öffnungsstellung 8 bzw. Verriegelungsstellung 9 des Gurtschlosses 3 differenzieren. Empfängt die RFID Leseeinheit 18 Signale oder Reflexionssignale beider RFID Transponder 15, 16, so befindet sich die Gurtzunge 7 zwar in dem Gurtschloss 3, ist jedoch nicht verriegelt. Ein solcher Zustand kann beim Einstecken der Gurtzunge in das Gurtschloss kurz vor dem Verriegeln gewährleistet sein. Gleichsam beim Herausführen der Gurtzunge 7 aus dem Gurtschloss 3 nach dem Lösen der Verriegelung. Jedenfalls ist die Druckfeder 45 in einer etwaigen Zwischenposition des Abschirmelements 19 im Vergleich zur ersten Position 25 komprimiert. Jedoch liegt die Komprimierung der Druckfeder 45 bei Vorliegen einer Zwischenposition des Abschirmelements 19 zwischen den Zuständen der Feder in der ersten Position 25 und der zweiten Position 26.

Besteht in der Öffnungsstellung 8 des Gurtschlosses 3 bzw. der Gurtzunge 7 ausschließlich eine Signalverbindung zwischen der RFID Leseeinheit 18 und dem ersten RFID Transponder 15, wird seitens der Auswerteeinheit 17 eine Systembewertung dahingehend vorgenommen, dass eine Öffnungsstellung 8 des Gurtschlosses 3 bzw. der Gurtzunge 7 vorliegt. Dies kann dem Nutzer des Fahrzeugs im Fahrzeugcockpit durch optisches oder akustisches Warnsignal angezeigt werden.

Besteht in der Verriegelungsstellung 9 des Gurtschlosses 3 bzw. der Gurtzunge 7 ausschließlich eine Signalverbindung zwischen der RFID Leseeinheit 18 und dem zweiten RFID Transponder 16, wird seitens der Auswerteeinheit 17 eine Systembewertung dahingehend vorgenommen, dass eine Verriegelungsstellung 8 des Gurtschlosses 3 bzw. der Gurtzunge 7 vorliegt. Auch dies kann dem Nutzer des Fahrzeugs im Fahrzeugcockpit durch ein optisches oder akustisches Signal, vorzugsweise einem OK-Signal oder einem Bestätigungssignal, angezeigt werden.

Besteht zwischen der RFID Leseeinheit 18 und dem ersten RFID Transponder 15 sowie dem zweiten RFID Transponder 16 keine Signalverbindung, so liegt ein Fehlerstatus vor, der dem Nutzer des Fahrzeugs ebenfalls über ein optisches oder akustisches Warnsignal angezeigt werden kann. Beispielsweise kann dem Nutzer in diesem Fall angezeigt werden, dass er eine Werkstatt zur Überprüfung des Sicherheitsgurtsystems aufsuchen soll.

### Bezugszeichenliste

- 1: Sitz
- 2: Sicherheitsgurtsystem
- 3: Gurtschloss
- 4: Sicherheitsgurt
- 5: Fahrzeuginsasse
- 7: Gurtzunge
- 8: Öffnungsstellung
- 9: Verriegelungsstellung
- 10: Ausnehmung
- 11: Riegel
- 12: Schulter-Brustgurtbereich
- 13: Beckengurtbereich
- 15: erster Transponder
- 16: zweiter Transponder
- 17: Auswerteeinheit
- 18: RFID Leseeinheit
- 19: Abschirmelement
- 20: elektromagnetische Welle
- 21: elektromagnetische Welle
- 22: elektromagnetische Welle
- 25: erste Position
- 26: zweite Position
- 35: erste Öffnung
- 36: zweite Öffnung
- 40: Abschirmgehäuse
- 41: Abschirmgehäuse
- 45: Druckfeder
- 60: Gurtaufroller
- 61: Umlenkelement
- 62: Endbeschlag
- 63: Gurtpeitsche

## Patentansprüche

1. System zur Erkennung des Verriegelungs- und/oder Funktionszustandes eines einem Sitz (1) eines Kraftfahrzeugs zugeordneten Sicherheitsgurtsystems (2), umfassend ein fahrzeug- oder sitzseitig befestigtes Gurtschloss (3) zur lösbaren Befestigung einer einem Sicherheitsgurt (4) zugeordneten Gurtzunge (7) bei Einführen der Gurtzunge (7) aus einer Öffnungs- in eine Verriegelungsstellung (8, 9), einen ersten und zweiten in dem Gurtschloss (3) positionsfest angeordneten RFID Transponder (15, 16), eine außerhalb des Gurtschlosses (3) angeordnete, mit einer Auswerteeinheit (17) verbundene RFID Leseeinheit (18), und ein in dem Gurtschloss (3) vorgesehenes Abschirmelement (19) zur Abschirmung elektromagnetischer Wellen (20, 21, 22), das bei Bewegung der Gurtzunge (7) von ihrer Öffnungsstellung (8) in die Verriegelungsstellung (9) von einer ersten Position (25) in eine zweiten Position (26) verschiebbar ist, **dadurch gekennzeichnet, dass** das Abschirmelement (19) eine erste Öffnung (35) aufweist, die in der ersten Position (25) des Abschirmelements (19) mit dem ersten Transponder (15) überlappt, wobei in dieser Position (25) eine Signalverbindung zwischen dem ersten Transponder (15) und der RFID Leseeinheit (18) gewährleistet ist, dass das Abschirmelement (19) eine zweite Öffnung (36) aufweist, die in der zweiten Position (26) des Abschirmelements (19) mit dem zweiten Transponder (16) überlappt, wobei in dieser Position (26) eine Signalverbindung zwischen dem zweiten Transponder (16) und der RFID Leseeinheit (18) gewährleistet ist und wobei die zweite Position zu einem Zustand korrespondiert, bei dem die Gurtzunge in dem Gurtschloss verriegelt ist, dass bei einer Zwischenposition des Abschirmelements (19) zwischen der ersten und zweiten Position (25, 26) der erste und zweite Transponder (15, 16) zumindest teilweise mit der ersten bzw. zweiten Öffnung (35, 36) überlappt, und dass die Auswerteeinheit (17) dazu eingerichtet ist anhand der von den Transpondern (15, 16) an die RFID Leseeinheit (18) übermittelten Informationen eine Systembewertung hinsichtlich des Verriegelungs- und/oder Funktionszustands vorzunehmen, wobei in der Zwischenposition des Abschirmelements (19) eine Signalverbindung zwischen der RFID Leseeinheit (18) und dem ersten und zweiten RFID Transponder (15, 16) besteht und die Auswerteeinheit (17) dazu eingerichtet ist, eine Systembewertung dahingehend vorzunehmen, dass sich die Gurtzunge (7) zwischen der Öffnungs- und Verriegelungsstellung (8, 9) befindet.

2. System nach Anspruch 1, **dadurch gekennzeichnet, dass** im Falle einer zumindest teilweisen Überlappung der ersten und/oder zweiten Öffnung (35, 36) mit dem ersten und/oder zweiten RFID Transponder (15, 16) eine auf elektromagnetischen Wellen (20, 21, 22) basierende Signalverbindung zwischen dem ersten bzw. zweiten RFID Transponder (15, 16) und der RFID Leseeinheit (18) gewährleistet ist, wobei der erste und/oder zweite Transponder (15, 16) zumindest teilweise nicht abgeschirmt ist.

3. System nach einem der vorangehenden Ansprüche, **dadurch gekennzeichnet, dass** in der ersten und zweiten Position (25, 26) sowie in der Zwischenposition elektromagnetische Wellen (20, 21, 22) durch die erste und/oder zweite Öffnung (35, 36) hindurchtreten.

4. System nach einem der vorangehenden Ansprüche, **dadurch gekennzeichnet, dass** die RFID Leseeinheit (18) ein Transmit-Receive Modul aufweist, welches auf elektromagnetischen Wellen (20) basierende Signale kontinuierlich in Richtung des ersten und zweiten RFID Transponders (15, 16) aussendet und vermöge dessen seitens der RFID Transponder (15, 16) ausgesendete Signale kontinuierlich empfangbar sind.

5. System nach einem der vorangehenden Ansprüche, **dadurch gekennzeichnet, dass** in der Öffnungsstellung (8) des Gurtschlosses (3) bzw. der Gurtzunge (7) ausschließlich eine Signalverbindung zwischen der RFID Leseeinheit (18) und dem ersten Transponder (15) besteht und seitens der Auswerteeinheit (17) eine Systembewertung dahingehend vorgenommen wird, dass eine Öffnungsstellung (8) des Gurtschlosses (3) bzw. der Gurtzunge (7) vorliegt.

6. System nach Anspruch 5, **dadurch gekennzeichnet, dass** das Vorliegen der Öffnungsstellung (8) des Gurtschlosses (3) bzw. der Gurtzunge (7) als optisches oder akustisches Warnsignal im Fahrzeugcockpit anzeigbar ist.

7. System nach einem der Ansprüche 1 bis 4, **dadurch gekennzeichnet, dass** in der Verriegelungsstellung (9) des Gurtschlosses (3) bzw. der Gurtzunge (7) ausschließlich eine Signalverbindung zwischen der RFID Leseeinheit (18) und dem zweiten RFID Transponder (16) besteht und seitens der Auswerteeinheit (17) eine Systembewertung dahingehend vorgenommen wird, dass eine Verriegelungsstellung (9) des Gurtschlosses (3) bzw. der Gurtzunge (7) vorliegt.

8. System nach Anspruch 7, **dadurch gekennzeichnet, dass** das Vorliegen der Verriegelungsstellung (9) des Gurtschlosses (3) bzw. der Gurtzunge (7) als optisches oder akustisches Signal im Fahrzeugcockpit anzeigbar ist.

9. System nach einem der Ansprüche 1 bis 4, **dadurch gekennzeichnet, dass** die Auswerteeinheit (17) dazu eingerichtet ist, in jenem Falle in dem weder eine Signalverbindung zwischen dem ersten RFID Transponder (15) und der RFID Leseeinheit (18) noch eine Signalverbindung zwischen dem zweiten Transponder (16) und der RFID Leseeinheit (18) besteht, eine Systembewertung dahingehend vorzunehmen, dass ein Fehlerstatus vorliegt.

10. System nach einem der vorangehenden Ansprüche, **dadurch gekennzeichnet, dass** es sich bei dem ersten und zweiten RFID Transponder (15, 16) um passive RFID Transponder (15, 16) handelt.

11. System nach einem der vorangehenden Ansprüche, **dadurch gekennzeichnet, dass** das Abschirmelement (19) eine zwei Öffnungen (35, 36) oder Materialausnehmungen aufweisende Abschirmplatte umfasst.

12. System nach einem der vorangehenden Ansprüche, **dadurch gekennzeichnet, dass** der erste und zweite RFID Transponder (15, 16) in einem Abschirmgehäuse (40, 41) angeordnet sind, wobei das Abschirmgehäuse (40, 41) in Richtung der Abschirmplatte geöffnet ist.

13. System nach einem der vorangehenden Ansprüche, **dadurch gekennzeichnet, dass** das Abschirmelement (19) gegen die Kraft einer Druckfeder (45) von der ersten Position (25) in die zweite Position (26) verschiebbar ist.

14. Verfahren zur Erkennung des Verriegelungs- und/oder Funktionszustandes eines einem Sitz (1) eines Kraftfahrzeugs zugeordneten Sicherheitsgurtsystems (2) unter Verwendung eines Systems gemäß einem der Patentansprüche 1 bis 13, das System umfassend ein fahrzeug- oder sitzseitig befestigtes Gurtschloss (3) zur lösbaren Befestigung einer einem Sicherheitsgurt (4) zugeordneten Gurtzunge (7), einen ersten und zweiten in dem Gurtschloss (3) positionsfest angeordneten RFID Transponder (15, 16), eine außerhalb des Gurtschlosses (3) angeordnete, mit einer Auswerteeinheit (17) verbundene RFID Leseeinheit (18), und ein in dem Gurtschloss (3) vorgesehenes Abschirmelement (19) zur Abschirmung elektromagnetischer Wellen (20, 21, 22), das bei Bewegung der Gurtzunge (7) von ihrer Öffnungsstellung (8) in die Verriegelungsstellung (9) von einer ersten Position (25) in eine zweiten Position (26) verschiebbar ist, **dadurch gekennzeichnet, dass** das Abschirmelement (19) eine erste Öffnung (35) aufweist, die in der ersten Position (25) des Abschirmelements (19) mit dem ersten RFID Transponder (15) überlappt, wobei in dieser Position (25) eine Signalverbindung zwischen dem ersten RFID Transponder (15) und der RFID Leseeinheit (18) gewährleistet ist, dass das Abschirmelement (19) eine zweite Öffnung (36) aufweist, die in der zweiten Position (26) des Abschirmelements (19) mit dem zweiten Transponder (16) überlappt, wobei in dieser Position (26) eine Signalverbindung zwischen dem zweiten Transponder (16) und der RFID Leseeinheit (18) gewährleistet ist und wobei die zweite Position zu einem Zustand korrespondiert, bei dem die Gurtzunge in dem Gurtschloss verriegelt ist, dass bei einer Zwischenposition des Abschirmelements (19) zwischen der ersten und zweiten Position (25, 26) der erste und zweite RFID Transponder (15, 16) zumindest teilweise mit der ersten bzw. zweiten Öffnung (35, 36) überlappt, und dass mit der Auswerteeinheit (17) anhand der von den RFID Transpondern (15, 16) an die RFID Leseeinheit (18) übermittelten Informationen eine Systembewertung hinsichtlich des Verriegelungs- und/oder Funktionszustands vorgenommen wird.

## Claims

1. System for detecting the locked and/or functional state of a safety belt system (2) associated with a seat (1) of a motor vehicle, comprising a belt lock (3), secured to the vehicle or to the seat, for releasably securing a belt tongue (7), associated with a safety belt (4), when the belt tongue (7) is introduced from an open position into a locked position (8, 9), a first and a second RFID transponder (15, 16) arranged at a fixed position in the belt lock (3), an RFID reading unit (18) arranged outside the belt lock (3) and connected to an evaluation unit (17), and a screening element (19), provided in the belt lock (3), for screening electromagnetic waves (20, 21, 22) that is displaceable from a first position (25) into a second position (26) when the belt tongue (7) moves from its open position (8) into the locked position (9), **characterized in that** the screening element (19) has a first opening (35) that overlaps the first transponder (15) in the first position (25) of the screening element (19), wherein a signal connection between the first transponder (15) and the RFID reading unit (18) is ensured in this position (25), **in that** the screening element (19) has a second opening (36) that overlaps the second transponder (16) in the second position (26) of the screening element (19), wherein a signal connection between the second transponder (16) and the RFID reading unit (18) is ensured in this position (26) and wherein the second position corresponds to a state in which the belt tongue is locked in the belt lock, **in that** the first and second transponders (15, 16) at least partially overlap the first and second openings (35, 36), respectively, when the screening element (19) is in an intermediate position between the first and second positions (25, 26), and **in that** the evaluation unit (17) is configured to use the information transmitted from the transponders (15, 16) to the RFID reading unit (18) to perform a system rating with regard to the locked and/or functional state, wherein in the intermediate position of the screening element (19) there is a signal connection between the RFID reading unit (18) and the first and second RFID transponders (15, 16) and the evaluation unit (17) is configured to perform a system rating to the effect that the belt tongue (7) is between the open and locked positions (8, 9).

2. System according to Claim 1, **characterized in that**, in the event of an at least partial overlap between the first and/or second opening (35, 36) and the first and/or second RFID transponder (15, 16), a signal connection between the first or second RFID transponder (15, 16) and the RFID reading unit (18) based on electromagnetic waves (20, 21, 22) is ensured, wherein the first and/or second transponder (15, 16) is at least partially not screened.

3. System according to either of the preceding claims, **characterized in that** electromagnetic waves (20, 21, 22) pass through the first and/or second opening (35, 36) in the first and second positions (25, 26) and in the intermediate position.

4. System according to one of the preceding claims, **characterized in that** the RFID reading unit (18) has a transmit-receive module that transmits signals based on electromagnetic waves (20) continuously in the direction of the first and second RFID transponders (15, 16) and by virtue of which signals transmitted by the RFID transponders (15, 16) are continuously receivable.

5. System according to one of the preceding claims, **characterized in that** in the open position (8) of the belt lock (3) or of the belt tongue (7) there is exclusively a signal connection between the RFID reading unit (18) and the first transponder (15) and the evaluation unit (17) performs a system rating to the effect that the belt lock (3) or the belt tongue (7) is in an open position (8).

6. System according to Claim 5, **characterized in that** the belt lock (3) or the belt tongue (7) being in the open position (8) is indicatable in the vehicle cockpit as a visual or audible warning signal.

7. System according to one of Claims 1 to 4, **characterized in that** in the locked position (9) of the belt lock (3) or of the belt tongue (7) there is exclusively a signal connection between the RFID reading unit (18) and the second RFID transponder (16) and the evaluation unit (17) performs a system rating to the effect that the belt lock (3) or the belt tongue (7) is in a locked position (9).

8. System according to Claim 7, **characterized in that** the belt lock (3) or the belt tongue (7) being in the locked position (9) is indicatable in the vehicle cockpit as a visual or audible signal.

9. System according to one of Claims 1 to 4, **characterized in that** the evaluation unit (17) is configured so as, **in that** case in which there is neither a signal connection between the first RFID transponder (15) and the RFID reading unit (18) nor a signal connection between the second transponder (16) and the RFID reading unit (18), to perform a system rating to the effect that there is a fault status.

10. System according to one of the preceding claims, **characterized in that** the first and second RFID transponders (15, 16) are passive RFID transponders (15, 16).

11. System according to one of the preceding claims, **characterized in that** the screening element (19) comprises a screening plate having two openings (35, 36) or material cutouts.

12. System according to one of the preceding claims, **characterized in that** the first and second RFID transponders (15, 16) are arranged in a screening housing (40, 41), wherein the screening housing (40, 41) is open in the direction of the screening plate.

13. System according to one of the preceding claims, **characterized in that** the screening element (19) is displaceable from the first position (25) into the second position (26) counter to the force of a compression spring (45).

14. Method for detecting the locked and/or functional state of a safety belt system (2) associated with a seat (1) of a motor vehicle by using a system according to one of Patent Claims 1 to 13, the system comprising a belt lock (3), secured to the vehicle or to the seat, for releasably securing a belt tongue (7) associated with a safety belt (4), a first and a second RFID transponder (15, 16) arranged at a fixed position in the belt lock (3), an RFID reading unit (18) arranged outside the belt lock (3) and connected to an evaluation unit (17), and a screening element (19), provided in the belt lock (3), for screening electromagnetic waves (20, 21, 22) that is displaceable from a first position (25) into a second position (26) when the belt tongue (7) moves from its open position (8) into the locked position (9), **characterized in that** the screening element (19) has a first opening (35) that overlaps the first RFID transponder (15) in the first position (25) of the screening element (19), wherein a signal connection between the first RFID transponder (15) and the RFID reading unit (18) is ensured in this position (25), **in that** the screening element (19) has a second opening (36) that overlaps the second transponder (16) in the second position (26) of the screening element (19), wherein a signal connection between the second transponder (16) and the RFID reading unit (18) is ensured in this position (26) and wherein the second position corresponds to a state in which the belt tongue is locked in the belt lock, **in that** the first and second RFID transponders (15, 16) at least partially overlap the first and second openings (35, 36), respectively, when the screening element (19) is in an intermediate position between the first and second positions (25, 26), and **in that** the evaluation unit (17) is used to take the information transmitted from the RFID transponders (15, 16) to the RFID reading unit (18) as a basis for performing a system rating with regard to the locked and/or functional state.

## Revendications

1. Système de détection de l'état de fonctionnement et/ou de verrouillage d'un système de ceinture de sécurité (2) associé à un siège (1) d'un véhicule automobile, ledit système de détection comprenant un verrou de ceinture (3) fixé au véhicule ou au siège et destiné à fixer de manière amovible une languette de ceinture (7) associée à une ceinture de sécurité (4), lorsque la languette de ceinture (7) est insérée depuis une position ouverte dans une position de verrouillage (8, 9), un premier et un deuxième transpondeur RFID (15, 16) disposés en une position fixe dans le verrou de ceinture (3), une unité de lecture RFID (18) disposée à l'extérieur du verrou de ceinture (3) et reliée à une unité d'évaluation (17) et un élément de blindage (19) qui est prévu dans le verrou de ceinture (3) et destiné à la protection contre les ondes électromagnétiques (20, 21, 22) et qui, lorsque la languette de ceinture (7) se déplace de sa position ouverte (8) jusque dans la position de verrouillage (9), peut coulisser d'une première position (25) jusque dans une deuxième position (26), **caractérisé en ce que** l'élément de blindage (19) comporte une première ouverture (35) qui recouvre le premier transpondeur (15) dans la première position (25) de l'élément de blindage (19), une liaison de signal entre le premier transpondeur (15) et l'unité de lecture RFID (18) étant assurée dans cette position (25), **en ce que** l'élément de blindage (19) comporte une deuxième ouverture (36) qui recouvre le deuxième transpondeur (16) dans la deuxième position (26) de l'élément de blindage (19), une liaison de signal entre le deuxième transpondeur (16) et l'unité de lecture RFID (18) étant assurée dans cette position (26) et la deuxième position correspondant à un état dans lequel la languette de ceinture est verrouillée dans le verrou de ceinture, **en ce que** les premier et deuxièmes transpondeurs (15, 16) recouvrent au moins partiellement la première ou la deuxième ouverture (35, 36) dans une position intermédiaire de l'élément de blindage (19) entre les première et deuxième positions (25, 26), et **en ce que** l'unité d'évaluation (17) est conçue pour effectuer une évaluation de système en ce qui concerne l'état de fonctionnement et/ou de verrouillage sur la base des informations transmises par les transpondeurs (15, 16) à l'unité de lecture RFID (18), une liaison de signal étant établie entre l'unité de lecture RFID (18) et les premier et deuxième transpondeurs RFID (15, 16) dans la position intermédiaire de l'élément de blindage (19) et l'unité d'évaluation (17) étant conçue pour effectuer une évaluation de système pour déterminer si la languette de ceinture (7) est située entre les positions d'ouverture et de verrouillage (8, 9).

2. Système selon la revendication 1, **caractérisé en ce que**, dans le cas où la première et/ou la deuxième ouverture (35, 36) recouvrent au moins partiellement le premier et/ou deuxième transpondeur RFID (15, 16), une liaison de signal basée sur des ondes électromagnétiques (20, 21, 22) est assurée entre le premier ou le deuxième transpondeur RFID (15, 16) et l'unité de lecture RFID (18), le premier et/ou le deuxième transpondeur (15, 16) étant au moins partiellement non blindés.

3. Système selon l'une des revendications précédentes, **caractérisé en ce que**, dans les première et deuxième positions (25, 26) et dans la position intermédiaire, des ondes électromagnétiques (20, 21, 22) traversent la première et/ou la deuxième ouverture (35, 36).

4. Système selon l'une des revendications précédentes, **caractérisé en ce que** l'unité de lecture RFID (18) comporte un module d'émission-réception qui émet en continu des signaux, basés sur des ondes électromagnétiques (20), en direction des premier et deuxième transpondeurs RFID (15, 16), ce qui permet de recevoir en continu des signaux émis par le transpondeur RFID (15, 16).

5. Système selon l'une des revendications précédentes, **caractérisé en ce que** seule une liaison de signal est établie entre l'unité de lecture RFID (18) et le premier transpondeur (15) dans la position ouverte (8) du verrou de ceinture (3) ou de la languette de ceinture (7) et l'unité d'évaluation (17) effectue une évaluation de système pour déterminer si le verrou de ceinture (3) ou la languette de ceinture (7) est en position ouverte (8).

6. Système selon la revendication 5, **caractérisé en ce que** la présence de la position ouverte (8) du verrou de ceinture (3) ou de la languette de ceinture (7) peut être indiquée sous forme de signal d'avertissement optique ou acoustique dans l'habitacle du véhicule.

7. Système selon l'une des revendications 1 à 4, **caractérisé en ce que** seule une liaison de signal est établie entre l'unité de lecture RFID (18) et le deuxième transpondeur RFID (16) dans la position de verrouillage (9) du verrou de ceinture (3) ou de la languette de ceinture (7) et l'unité d'évaluation (17) effectue une évaluation de système pour déterminer si le verrou de ceinture (3) ou la languette de ceinture (7) est dans une position verrouillée (9).

8. Système selon la revendication 7, **caractérisé en ce que** la présence de la position de verrouillage (9) de la serrure de ceinture (3) ou de la languette de ceinture (7) peut être indiquée sous forme d'un signal optique ou acoustique dans l'habitacle du véhicule.

9. Système selon l'une des revendications 1 à 4, **caractérisé en ce que** l'unité d'évaluation (17) est conçue pour effectuer, en l'absence de liaison de signal entre le premier transpondeur RFID (15) et l'unité de lecture RFID (18) et de liaison de signal entre le deuxième transpondeur (16) et l'unité de lecture RFID (18), une évaluation de système pour déterminer s'il y a un état d'erreur.

10. Système selon l'une des revendications précédentes, **caractérisé en ce que** les premier et deuxième transpondeurs RFID (15, 16) sont des transpondeurs RFID passifs (15, 16).

11. Système selon l'une des revendications précédentes, **caractérisé en ce que** l'élément de blindage (19) comprend une plaque de blindage pourvue de deux ouvertures (35, 36) ou évidements de matière.

12. Système selon l'une des revendications précédentes, **caractérisé en ce que** les premier et deuxième transpondeurs RFID (15, 16) sont disposés dans un boîtier de blindage (40, 41), le boîtier de blindage (40, 41) étant ouvert en direction de la plaque de blindage.

13. Système selon l'une des revendications précédentes, **caractérisé en ce que** l'élément de blindage (19) peut coulisser de la première position (25) à la deuxième position (26) en s'opposant à la force d'un ressort de compression (45).

14. Procédé de détection de l'état de fonctionnement et/ou de verrouillage d'un système de ceinture de sécurité (2), associé à un siège (1) d'un véhicule automobile, à l'aide d'un système selon l'une des revendications 1 à 13, le système comprenant un verrou de ceinture (3) fixé au véhicule ou au siège et destiné à fixer de manière amovible une languette de ceinture (7) associée à une ceinture de sécurité (4), un premier et un deuxième transpondeur RFID (15, 16) disposés en une position fixe dans le verrou de ceinture (3), une unité de lecture RFID (18) disposée à l'extérieur du verrou de ceinture (3) et reliée à une unité d'évaluation (17) et un élément de blindage (19) qui est prévu dans le verrou de ceinture (3) et destiné à la protection contre les ondes électromagnétiques (20, 21, 22) et qui, lorsque la languette de ceinture (7) se déplace de sa position ouverte (8) jusque dans la position de verrouillage (9), peut coulisser d'une première position (25) jusque dans une deuxième position (26), **caractérisé en ce que** l'élément de blindage (19) comporte une première ouverture (35) qui recouvre le premier transpondeur (15) dans la première position (25) de l'élément de blindage (19), une liaison de signal entre le premier transpondeur (15) et l'unité de lecture RFID (18) étant assurée dans cette position (25), **en ce que** l'élément de blindage (19) comporte une deuxième ouverture (36) qui recouvre le deuxième transpondeur (16) dans la deuxième position (26) de l'élément de blindage (19), une liaison de signal entre le deuxième transpondeur (16) et l'unité de lecture RFID (18) étant assurée dans cette position (26) et la deuxième position correspondant à un état dans lequel la languette de ceinture est verrouillée dans le verrou de ceinture, **en ce que** les premier et deuxièmes transpondeurs (15, 16) recouvrent au moins partiellement la première ou la deuxième ouverture (35, 36) dans une position intermédiaire de l'élément de blindage (19) entre les première et deuxième positions (25, 26), et **en ce que** l'unité d'évaluation (17) effectue une évaluation de système en ce qui concerne l'état de fonctionnement et/ou de verrouillage sur la base des informations transmises par les transpondeurs (15, 16) à l'unité de lecture RFID (18).
